# EUROPÄISCHE PATENTANMELDUNG

(11) **EP 3 598 163 A1**
(43) Veröffentlichungstag der Anmeldung: **22.01.2020**
(21) Anmeldenummer: 19176313.5
(22) Anmeldetag: 23.05.2019
(51) Int. Cl.: G01S 5/00, G01C 21/36, G01S 5/02

(54) **VERFAHREN UND VORRICHTUNG ZUR GENAUIGKEITSSTEIGERUNG EINER ORTSBESTIMMUNG**

(30) Priorität: 20.07.2018 DE 102018212133
(71) Anmelder: Continental Automotive GmbH, 30165 Hannover (DE)
(72) Erfinder: Hamer, Henning, 81543 München (DE); Mattmüller, Karsten, 93133 Burglengenfeld (DE); Hamperl, Helmut, 93413 Cham (DE); Karn, Holger, 31170 Tournefeuille (FR)

(57) **Zusammenfassung**

Die Erfindung betrifft ein Verfahren mit folgenden Schritten:
a) Erfassen eines ausgewählten Objekts (15) in einer Umgebung (10), mittels einer Kamera (21) eines ersten Fahrzeugs (31);
b) Abschätzen einer ersten Position (51) des ausgewählten Objekts, wobei ein erstes Programm erste Ortskoordinaten (61) des ersten Fahrzeugs und eine erste Entfernungsabschätzung (71) zu dem ausgewählten Objekt verwendet;
c) Übertragen eines Attributs des ausgewählten Objekts, der ersten Ortskoordinaten und der ersten Entfernungsabschätzung an einen Server (90);
d) Durchführen der Schritte a) bis c) für ein zweites Fahrzeug (32);
e) Berechnen einer dritten Position (53) des ausgewählten Objekts durch den Server, wobei ein drittes Programm eine Mittelung der Vielzahl von Ortskoordinaten (61, 62) und Entfernungsabschätzungen (71, 72) vornimmt;
f) Verwenden der dritten Position (53) des ausgewählten Objekts als Referenzposition zur Genauigkeitssteigerung einer Ortsbestimmung eines dritten Fahrzeugs.

## Beschreibung

Die Erfindung betrifft ein Verfahren und eine Vorrichtung zur Ortsbestimmung, insbesondere zur Genauigkeitssteigerung einer Ortsbestimmung, außerdem eine Verwendung, ein Programmelement und ein computerlesbares Medium.

Zur Ortsbestimmung werden in vielen Fällen Navigationssysteme verwendet. Diese sind beispielsweise als einzelne Geräte verfügbar (sog. "Handhelds") oder sie sind in einem Fahrzeug eingebaut. Navigationssysteme verwenden in vielen Fällen Informationen, die von Satelliten gesendet werden. Eine Familie von Navigationssystemen verwendet das sog. "GPS"-System (GPS: Global Positioning System) . Es sei darauf hingewiesen, dass im Kontext der vorliegenden Erfindung GPS stellvertretend für sämtliche Globale Navigationssatellitensysteme (GNSS) steht, wie z.B. GPS, Galileo, GLONASS (Russland), Compass (China), IRNSS (Indien), Beidou, oder andere.

Aus verschiedenen Gründen sind die von den Satelliten empfangenen Informationen in vielen Fällen ungenau. Diese Ungenauigkeit führt in vielen Fällen dazu, dass unter ausschließlicher Verwendung der Signale von den Satelliten eine Abweichung der Ortsbestimmung durch die Navigationssysteme von der realen Position eines Objekts und/oder der eigenen Position mehrere Meter beträgt. Diese Genauigkeit ist für eine Reihe von Anwendungen unzureichend.

Es ist Aufgabe der Erfindung, die Genauigkeit einer Ortsbestimmung zumindest teilweise zu verbessern.

Diese Aufgabe wird durch den Gegenstand der unabhängigen Patentansprüche gelöst. Weiterbildungen der Erfindung ergeben sich aus den Unteransprüchen und der folgenden Beschreibung.

Ein Verfahren zur Genauigkeitssteigerung einer Ortsbestimmung umfasst folgende Schritte:
a) Erfassen eines ausgewählten Objekts in einer Umgebung, mittels einer Kamera eines ersten Fahrzeugs.
   Dabei wird unter Umgebung eine reale Umgebung verstanden, in der Objekte angeordnet sind und in der sich beispielsweise Personen oder Fahrzeuge bewegen können. Bestimmte Objekte können ausgewählt sein. Derartige ausgewählte Objekte können z.B. statische Landmarken sein, beispielsweise Kirchen, Türme, Burgen, Brücken (z.B. für Boote) oder andere topographisches Objekte sein. Ausgewählte Objekte können beispielsweise auch Verkehrszeichen oder Verkehrsinseln sein.
   Das Erfassen eines ausgewählten Objekts geschieht mittels einer Kamera. Dabei können z.B. Mono-, Stereo- oder Surround-View-Kameras verwendet werden. Die Kamera oder Kameras können an dem Fahrzeug angeordnet sein. Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad. In einer Ausführungsform kann es sich auch um einen Fußgänger oder, in einer Ausführungsform, um einen stationären Träger einer Kamera handeln.
b) Abschätzen einer ersten Position des ausgewählten Objekts, mittels eines ersten Programms zur Ortsbestimmung, in dem ersten Fahrzeug. Dabei verwendet das erste Programm erste Ortskoordinaten des ersten Fahrzeugs und eine erste Entfernungsabschätzung zu dem ausgewählten Objekt.
   Die Positionen werden dabei insbesondere in WGS 94-Koordinaten (WGS 94: World Geodetic System 1894) beschrieben. Die erste Position wird in diesem Schritt mittels eines ersten Programms zur Ortsbestimmung abgeschätzt. Das erste Programm kann ein existierendes Programm, das in einigen Fahrzeugen - für unterschiedliche Verwendungen - bereits bei der Auslieferung des Fahrzeugs zur Verfügung stehen kann oder auch nachgerüstet und/oder regelmäßig angepasst werden kann. Es kann sich dabei um einen Fahrzeug-spezifischen Algorithmus handeln. Zur Abschätzung der ersten Position des ausgewählten Objekts ermittelt das erste Programm, z.B. in einem Zwischenschritt, zumindest erste Ortskoordinaten des ersten Fahrzeugs und eine erste Entfernungsabschätzung. Die ersten Ortskoordinaten können beispielsweise - z.B. wenn Informationen von dem System GPS verwendet werden - durch Standard-GPS berechnet worden sein. Diese Ortskoordinaten können mit einer größeren Ungenauigkeit behaftet sein, so dass diese für viele Zwecke nicht ohne Weiteres verwendbar sind. Die Entfernungsabschätzung zu dem ausgewählten Objekt kann von dem ersten Programm beispielsweise mittels Triangulation unter Verwendung einer Stereo-Kamera durchgeführt werden. Die Berechnung mittels des ersten Programms kann in einer Rechenvorrichtung in dem Fahrzeug durchgeführt werden, aber auch auf einem Server, der die Daten von dem ersten Fahrzeug empfängt. Die Ortskoordinaten beziehen sich auf einen definierten Punkt an oder in dem ersten Fahrzeug, z.B. auf den Außenspiegel auf der Fahrerseite.
   Damit stehen nach diesem Schritt mindestens folgende Informationen zur Verfügung:
   - Ein oder mehrere Attribute des ausgewählten Objekts, z.B. "STOP-Schild in der XY-Straße" oder "östliche Seite des mittleren Brückenpfeilers".
   - Ortskoordinaten des ersten Fahrzeugs, beispielsweise die "Raw-GPS"-Daten des ersten Fahrzeugs zum Messzeitpunkt.
   - Eine erste Entfernungsabschätzung zwischen dem ersten Fahrzeug und dem ausgewählten Objekt. Dabei liegen entweder zwei- oder dreidimensionale Daten vor. Diese Daten können z.B. kartesische oder Polarkoordinaten sein.
c) Übertragen eines Attributs des ausgewählten Objekts, der ersten Ortskoordinaten und der ersten Entfernungsabschätzung an einen Server.
   Das Übertragen der genannten Daten kann auf drahtlosem Weg geschehen, es kann aber auch beispielsweise über eine Service-Schnittstelle aus einem Speicher des Fahrzeugs ausgelesen werden. Als Technologien für das Übertragen können direkte Kommunikationsverbindungen, wie z.B. WLAN (z. B. WLAN 802.11a/b/g/n oder WLAN 802.11p), ZigBee oder WiMax oder auch zelluläre Funksysteme wie GPRS, UMTS oder LTE verwendet werden. Es ist auch die Verwendung anderer Übertragungsprotokolle möglich. Die genannten Protokolle bieten den Vorteil der bereits erfolgten Standardisierung.
d) Durchführen der Schritte a) bis c) für das ausgewählte Objekt, zum Abschätzen einer zweiten Position des ausgewählten Objekts, mittels einer Kamera eines zweiten Fahrzeugs, mittels eines zweiten Programms zur Ortsbestimmung, unter Verwendung von zweiten Ortskoordinaten und einer zweiten Entfernungsabschätzung.
   Die Schritte a) bis c) werden für das ausgewählte Objekt sinngemäß auch durch ein zweites Fahrzeug durchgeführt. Das zweite Fahrzeug kann beispielsweise ein unterschiedliches zweites Fahrzeug sein, es kann das erste Fahrzeug sein, das sich wiederholt an einer bestimmten Position befindet, von der aus die Kamera das ausgewählte Objekt erfassen kann; das zweite Fahrzeug kann auch eine Vielzahl von Fahrzeugen sein, welche das ausgewählte Objekt mittels einer Kamera erfassen. In einer Ausführungsform kann die Kamera stationär in einer definierten Entfernung zu dem ausgewählten Objekt angeordnet sein. Das zweite Programm zur Ortsbestimmung kann mit dem ersten Programm identisch sein, es kann aber auch ein völlig anderes Programm sein, welches dieselbe Art von Ergebnisse wie das erste Programm liefert. Nach dem Schritt d) stehen also die Daten eines Attributs des ausgewählten Objekts, der zweiten Ortskoordinaten und der zweiten Entfernungsabschätzung zur Verfügung, die an den Server übertragen werden.
e) Berechnen einer dritten Position des ausgewählten Objekts durch den Server, mittels eines dritten Programms, unter Verwendung eines Attributs des ausgewählten Objekts, der ersten Ortskoordinaten und der ersten Entfernungsabschätzung, der zweiten Ortskoordinaten und der zweiten Entfernungsabschätzung. Dabei nimmt das dritte Programm eine Mittelung der Vielzahl von Ortskoordinaten und Entfernungsabschätzungen vor.
   Die Mittelung der Vielzahl von Ortskoordinaten kann z.B. das arithmetische Mittel oder das gewichtete arithmetische Mittel verwenden. Das erste Programm und das zweite Programm sind in vielen Fällen nicht sehr zeit- oder rechenaufwändig. Dies kann darin begründet sein, weil diese Programme zumindest weiche Echtzeitbedingungen erfüllen müssen. Dies kann darin begründet sein, dass die Rechenkapazität in Fahrzeugen, z.B. aus Energie- oder Kostengründen, in vielen Fällen beschränkt ist. Das dritte Programm hingegen kann deutlich zeit- und/oder rechenaufwändiger sein, weil es bei diesem Programm nicht so wichtig ist, dass dessen Ergebnisse schnell vorliegen; vielmehr wird eine hohe Genauigkeit der Ergebnisse angestrebt. Das Ergebnis des dritten Programms umfasst zumindest die dritte Position des ausgewählten Objekts.
f) Verwenden der dritten Position des ausgewählten Objekts als Referenzposition zur Genauigkeitssteigerung einer Ortsbestimmung eines dritten Fahrzeugs.
   Wenn die dritte Position vorliegt, dann kann diese als Referenzposition von dem dritten Fahrzeug (oder auch z.B. von "Handhelds") zur Genauigkeitssteigerung einer Ortsbestimmung verwendet werden. Dies kann sowohl Dies ist insbesondere vorteilhaft, weil mit dem geschilderten Verfahren eine größere Anzahl von Referenzpositionen vorliegen, so dass eine Korrektur der Ortsbestimmung - z.B. auf der Basis von "Raw-GPS"-Daten - relativ feinmaschig vorgenommen werden kann, so dass die Abweichung an keiner Stelle eines derartig vorbereiteten Gebiets sehr groß ist. Die Referenzpositionen müssen auch nicht mit hohem Aufwand bestimmt und vor Ort markiert werden, sondern können z.B. an einer zentralen Stelle ermittelt bzw. berechnet werden, unter Verwendung des dritten Programms. Weiterhin kann die Anzahl der Referenzpositionen kontinuierlich erweitert werden, so dass die Korrektur im Laufe der Zeit immer feinmaschiger werden kann. Insbesondere wegen des geringen Vorbereitungsaufwands und weil die Rechenleistung nicht zeitkritisch ist - und daher auf eine längere Zeitspanne verteilt werden kann -, ist dieses Verfahren auch recht kostengünstig.

In einer Ausführungsform wird Schritt c*) nach Schritt c) eingefügt, mit:
c*) Ersetzen, auf dem Server, der ersten Ortskoordinaten und der zweiten Ortskoordinaten mittels eines vierten Programms, durch korrigierte erste Ortskoordinaten und korrigierte zweite Ortskoordinaten. Das vierte Programm kann z.B. Raw-GPS-Daten verwenden, um damit präzisere Daten für die korrigierten ersten und korrigierten zweiten Ortskoordinaten zu bestimmen. In dieser Ausführungsform werden in Schritt d) die Schritte a) bis c*) durchgeführt.

In einer Ausführungsform wird Schritt e) ersetzt durch e*), mit:
e*) Berechnen einer dritten Position des ausgewählten Objekts, wobei das dritte Programm einen Schwerpunkt der Vielzahl von Ortskoordinaten und Entfernungsabschätzungen berechnet.
Der Schwerpunkt der Vielzahl von Ortskoordinaten und Entfernungsabschätzungen ist dabei der Mittelpunkt einer Punktewolke, entweder der Summe von Ortskoordinaten und Entfernungsabschätzungen oder der Summe von Ortskoordinaten und der Summe der Entfernungsabschätzungen.

In einer Ausführungsform wird Schritt f) ersetzt durch f*), mit
f*) Korrigieren der ersten Ortskoordinaten des ersten Fahrzeugs und der zweiten Ortskoordinaten des zweiten Fahrzeugs unter Verwendung einer vierten Position des ausgewählten Objekts. Dabei wird die vierte Position des ausgewählten Objekts von einer Datenbank bezogen.
Wenn die vierte Position des ausgewählten Objekts in einer guten Genauigkeit vorhanden ist, d.h. beispielsweise von einer Datenbank bezogen werden kann, dann können die ersten Ortskoordinaten des ersten Fahrzeugs und der zweiten Ortskoordinaten des zweiten Fahrzeugs in einer solchen Weise korrigiert werden, dass diese z.B. die Differenz bilden zwischen der in den Fahrzeugen berechneten Position des ausgewählten Objekts und der vierten Position des ausgewählten Objekts. Diese Differenz kann an einer Stelle, an der die Kamera das ausgewählte Objekt erfasst, vorgenommen werden.

In einer Ausführungsform ist das ausgewählte Objekt eine statische Landmarke, beispielsweise eine Kirche, ein Turm, eine Burg, eine Brücke (insbesondere für Boote) oder ein anderes topographisches Objekt. In einer Ausführungsform ist das ausgewählte Objekt ein Verkehrszeichen oder eine Verkehrsinsel.

Es kann auch ein Austausch dieser ausgewählten Objekte zwischen verschiedenen Karten- und/oder Navigationssystemen stattfinden.

In einer Ausführungsform werden die Ortskoordinaten unter Verwendung von Raw-GPS ermittelt. Dies kann insbesondere in einer Umgebung stattfinden, bei der GPS besonders geeignet zur Verwendung für Navigationssysteme ist.

In einer Ausführungsform wird die Position in WGS 94-Koordinaten angegeben. Dabei bildet das sog. "World Geodetic System 1894" die Grundlage.

Die Erfindung umfasst auch eine Vorrichtung zur Genauigkeitssteigerung einer Ortsbestimmung in einem Fahrzeug, welche eine Rechen- und Steuervorrichtung umfasst, die eingerichtet ist, eines der oben erläuterten Verfahren durchzuführen.

Die Erfindung umfasst weiterhin ein Programmelement, welches, wenn es auf einer Rechen- und Steuervorrichtung ausgeführt wird, geeignet ist, das beschriebene Verfahren durchzuführen.

Die Erfindung umfasst ferner ein computerlesbares Medium, auf dem das Programmelement gespeichert ist.

Die Erfindung umfasst die Verwendung einer Vorrichtung oder eines Verfahrens wie oben beschrieben zur Genauigkeitssteigerung einer Ortsbestimmung in einem Navigationssystem, insbesondere in einem Fahrzeug.

Zur weiteren Verdeutlichung wird die Erfindung anhand von in den Figuren abgebildeten Ausführungsform beschrieben. Diese Ausführungsformen sind nur als Beispiel, nicht aber als Einschränkung zu verstehen.

Dabei zeigen:
**Fig. 1**: ein Beispielszenario, bei dem ein Fahrzeug ein ausgewähltes Objekt erfasst;
**Fig. 2**: ein Verfahren zur Genauigkeitssteigerung einer Ortsbestimmung.

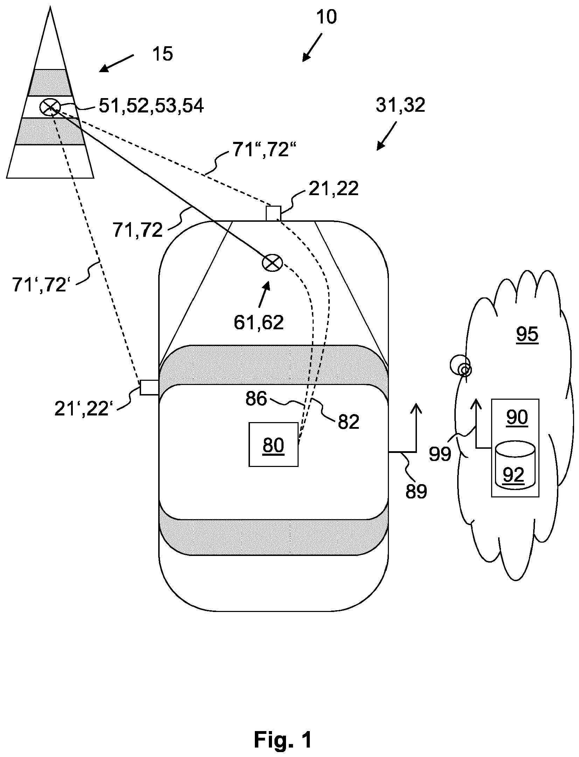

**Fig. 1** zeigt ein Fahrzeug 31, 32, das in einer Umgebung 10 ein ausgewähltes Objekt 15 erfasst. Das Fahrzeug kann ein erstes Fahrzeug 31 oder ein zweites Fahrzeug 32 sein. Das Fahrzeug weist zwei Kameras auf: 21 und 21' sind dabei an dem ersten Fahrzeug angeordnet, 22 und 22' an dem zweiten Fahrzeug. Diese können als Stereo-Kamera konfiguriert sein. Jedes der Fahrzeuge 31, 32 erfasst das ausgewähltes Objekt 15, in dem es die eigenen Ortskoordinaten 61 bzw. 62 verwendet. Bezugspunkt kann z.B. der linke Außenspiegel oder auch die Kamera 21' bzw. 22' sein. Ferner nimmt das erste Fahrzeug 31 eine Triangulation vor. Dabei wird die Ortsbestimmung 71', von der Kamera 21', mit der Ortsbestimmung 71", von der Kamera 21, koordiniert und, mittels eines ersten Programms, eine erste Entfernungsabschätzung 71 berechnet. Das zweite Fahrzeug 32 berechnet, mittels der Kameras 22 und 22' und eines zweiten Programms, eine zweite Entfernungsabschätzung 72. Das erste und das zweite Programm können in einer Ausführungsform dasselbe Programm sein. Die Koordination von GPS und Kameras geschieht über die Rechen- und Steuervorrichtung 80, welche über die Interfaces 86 und 82 mit dem GPS-Navigationssystem und den Kameras verbunden ist (zur Vereinfachung wird hierfür jeweils nur ein Symbol und ein Bezugszeichen verwendet, die für jedes Fahrzeug gelten sollen). Die Rechenvorrichtung 80 kann auch das erste bzw. das zweite Programm ausführen.

Jedes der Fahrzeuge 31, 32 (und, in der Realität, noch eine Vielzahl von weiteren Fahrzeugen) überträgt diese Daten, zusammen mit einem Attribut des ausgewählten Objekts 15, an den Server 90, über die drahtlosen Schnittstellen 89 und 99. Der Server 90 kann in einer Cloud 95 angeordnet sein. Der Server 90 berechnet auf dieser Basis eine dritte Position 53 des ausgewählten Objekts 15 und speichert diese in der Datenbank 92. In einer Ausführungsform ist eine vierte Position 54 bereits in der Datenbank 92 gespeichert. Weitere Fahrzeuge können die Position 53 oder 54 dann als Referenzposition zur Genauigkeitssteigerung ihrer Ortsbestimmung verwenden. In einer Ausführungsform werden die Positionen 53 oder 54 kontinuierlich oder in wählbaren Abständen überprüft, so dass Änderungen - z.B. ein Entfernen oder Verschieben des ausgewählten Objekts 15 - in dynamischer Weise berücksichtigt werden können.

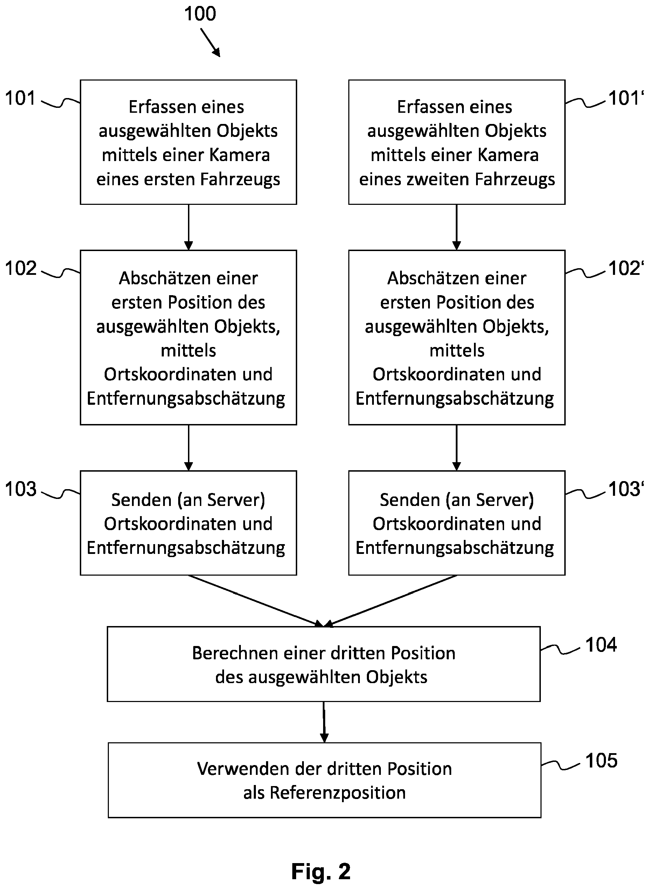

**Fig. 2** zeigt ein Verfahren 100 zur Genauigkeitssteigerung einer Ortsbestimmung. In Schritt 101 wird ein ausgewähltes Objekt 15 mittels einer Kamera 21 eines ersten Fahrzeugs 31 erfasst. In Schritt 102 wird eine erste Position 51 des ausgewählten Objekts 15 berechnet, mittels erster Ortskoordinaten 61 und einer ersten Entfernungsabschätzung 71, unter Verwendung eines ersten Programms. In Schritt 103 werden die ersten Ortskoordinaten 61 und die erste Entfernungsabschätzung 71 an den Server 90 übertragen bzw. gesendet.

In den Schritten 101 ', 102' und 103' werden ähnliche Aktionen wie in den Schritten 101, 102 und 103 durchgeführt, aber für ein zweites Fahrzeug 32 bzw. für eine Vielzahl von Fahrzeugen 32. In Schritt 104 werden die Ortskoordinaten 61, 62 und Entfernungsabschätzungen 71, 72 in dem Server 90 zusammengeführt und daraus die dritte Position 53 des ausgewählten Objekts 15 berechnet. In Schritt 104 wird die dritte Position 53 als Referenzposition verwendet. Dies kann von beliebigen Fahrzeugen geschehen, welche eine Liste der ausgewählten Objekte 15 und das hier erläuterte Verfahren verwenden.

### Liste der Bezugszeichen

- 10: Umgebung
- 15: ausgewähltes Objekt
- 21, 22: Kamera
- 31, 32: erstes und zweites Fahrzeug
- 61, 62: erste und zweite Ortskoordinaten
- 61', 62': korrigierte erste und zweite Ortskoordinaten
- 71, 72: erste und zweite Entfernungsabschätzung
- 71', 71", 72', 72": Ortsbestimmungen
- 80: Rechen- und Steuervorrichtung
- 82: Interface zur Kamera
- 86: Interface zur Positionsvorrichtung
- 89: drahtlose Schnittstelle des Fahrzeugs
- 90: Server
- 92: Datenbank
- 95: Cloud
- 99: drahtlose Schnittstelle des Servers
- 100: Verfahren
- 101 .. 105: Schritte

## Patentansprüche

1. Verfahren zur Genauigkeitssteigerung einer Ortsbestimmung, mit den Schritten:
a) Erfassen eines ausgewählten Objekts (15) in einer Umgebung (10), mittels einer Kamera (21) eines ersten Fahrzeugs (31);
b) Abschätzen einer ersten Position (51) des ausgewählten Objekts (15), mittels eines ersten Programms zur Ortsbestimmung, in dem ersten Fahrzeug (31),
wobei das erste Programm erste Ortskoordinaten (61) des ersten Fahrzeugs (31) und eine erste Entfernungsabschätzung (71) zu dem ausgewählten Objekt (15) verwendet;
c) Übertragen eines Attributs des ausgewählten Objekts (15), der ersten Ortskoordinaten (61) und der ersten Entfernungsabschätzung (71) an einen Server (90);
d) Durchführen der Schritte a) bis c) für das ausgewählte Objekt (15), zum Abschätzen einer zweiten Position (52) des ausgewählten Objekts (15), mittels einer Kamera (22) eines zweiten Fahrzeugs (32), mittels eines zweiten Programms zur Ortsbestimmung, unter Verwendung von zweiten Ortskoordinaten (62) und einer zweiten Entfernungsabschätzung (72);
e) Berechnen einer dritten Position (53) des ausgewählten Objekts (15) durch den Server, mittels eines dritten Programms, unter Verwendung eines Attributs des ausgewählten Objekts, der ersten (61) und der zweiten (62) Ortskoordinaten und der ersten (71) und der zweiten (72) Entfernungsabschätzung,
wobei das dritte Programm eine Mittelung der Vielzahl von Ortskoordinaten (61, 62) und Entfernungsabschätzungen (71, 72) vornimmt;
f) Verwenden der dritten Position (53) des ausgewählten Objekts (15) als Referenzposition zur Genauigkeitssteigerung einer Ortsbestimmung eines dritten Fahrzeugs (33).

2. Verfahren nach Anspruch 1, wobei Schritt c*) nach Schritt c) eingefügt wird, mit
c*) Ersetzen, auf dem Server (90), der ersten Ortskoordinaten (61) und der zweiten Ortskoordinaten (62), mittels eines vierten Programms, durch korrigierte erste Ortskoordinaten (61') und korrigierte zweite Ortskoordinaten (62').

3. Verfahren nach Anspruch 1, wobei Schritt e) ersetzt wird durch e*), mit
e*) Berechnen einer dritten Position (53) des ausgewählten Objekts (15), wobei das dritte Programm einen Schwerpunkt der Vielzahl von Ortskoordinaten (61, 62) und Entfernungsabschätzungen (71, 72) berechnet.

4. Verfahren nach Anspruch 1, wobei Schritt f) ersetzt wird durch f*), mit
f*) Korrigieren der ersten Ortskoordinaten (61) des ersten Fahrzeugs (31) und der zweiten Ortskoordinaten (62) des zweiten Fahrzeugs (32) unter Verwendung einer vierten Position (54) des ausgewählten Objekts (15),
wobei die vierte Position (54) des ausgewählten Objekts (15) von einer Datenbank (92) bezogen wird.

5. Verfahren nach einem der vorhergehenden Ansprüche,
wobei das ausgewählte Objekt (15) eine statische Landmarke oder ein Verkehrszeichen ist.

6. Verfahren nach einem der vorhergehenden Ansprüche,
wobei die Ortskoordinaten (61, 62) mittels Raw-GPS ermittelt werden.

7. Verfahren nach einem der vorhergehenden Ansprüche,
wobei die Position (51, 52, 53, 54) in WGS 94-Koordinaten angegeben wird.

8. Vorrichtung zur Genauigkeitssteigerung einer Ortsbestimmung in einem Fahrzeug (10),
welche eine Rechen- und Steuervorrichtung (80) umfasst, die eingerichtet ist, ein Verfahren nach einem der Ansprüche 1 bis 7 durchzuführen.

9. Programmelement, welches, wenn es auf einer Rechen- und Steuervorrichtung (80) ausgeführt wird, die Rechen- und Steuervorrichtung (80) anleitet, das Verfahren nach einem der Ansprüche 1 bis 7 durchzuführen.

10. Programmelement, welches, wenn es auf einem Server (90) ausgeführt wird, den Server (90) anleitet, das Verfahren nach einem der Ansprüche 1 bis 7 durchzuführen.

11. Computerlesbares Medium, auf dem ein Programmelement nach Anspruch 9 oder 10 gespeichert ist, das, wenn es auf einer Rechen- und Steuervorrichtung (80) oder einem Server (90) ausgeführt wird, den Prozessor anleitet, das Verfahren nach einem der Ansprüche 1 bis 7 durchzuführen.

12. Verwendung eines Verfahren nach einem der Ansprüche 1 bis 7 zur Genauigkeitssteigerung einer Ortsbestimmung in einem Navigationssystem, insbesondere in einem Fahrzeug (30, 31).
